Europäisches Patentamt

European Patent Office

Office européen des brevets

(19)

(11) Publication number: **0 251 484**

**A2**

(12) **EUROPEAN PATENT APPLICATION**

(21) Application number: 87304635.3

(51) Int. Cl.⁴: **H04B 9/00**

(22) Date of filing: 26.05.87

| | |
|---|---|
| The title of the invention has been amended (Guidelines for Examination in the EPO, A-III, 7.3). | (71) Applicant: **NORTHERN TELECOM LIMITED** **600 de la Gauchetiere Street West** **Montreal Quebec H3B 4N7(CA)** |
| (30) Priority: 30.05.86 CA 510504 | (72) Inventor: **Kahn, David Alexander** **3 Wareham Street** **Nepean Ontario K2H 6P7(US)** |
| (43) Date of publication of application: **07.01.88 Bulletin 88/01** | (74) Representative: **Crawford, Andrew Birkby et al** **A.A. THORNTON & CO. Northumberland** **House 303-306 High Holborn** **London WC1V 7LE(GB)** |
| (84) Designated Contracting States: **DE FR GB NL SE** | |

(54) **Power level control for an optical communication system.**

(57) An optical transmission system comprises a plurality of optical transmitters (10,12,14,16) coupled by a common channel or bus to an optical receiver. The optical transmitters (10,12,14,16) are operated using TDM (time division multiplexing), each TDM period being word or message length. The optical transmitters each comprise at least one current source (12,14) to drive the light source (10), for example a laser, in response to the data signal, to vary its output power about a steady level which is an average of the maximum and minimum values. The or each current source (12,14) may be so controlled as to increase its output gradually (preferably sinusoidally) to reach the aforesaid mean level at the beginning of a TDM period and to decrease it in the converse way after the period ends. Such an arrangement avoids the need for guard time before and after the TDM time period, thereby increasing channel efficiency, and improves receiver (40-48) sensitivity by reducing quantum or shot noise due to steady light from inactive transmitters.

## OPTICAL COMMUNICATION SYSTEM

Field

This invention relates to optical communication systems and is applicable especially to systems in which an optical receiver receives signals from several transmitters in common using time division multiplexing, particularly using word or message rather than bit-partitioning.

Background of the Invention

The invention is particularly applicable to systems in which a plurality of transmitters are connected to a receiver by way of a common communication channel or bus. Each transmitter is coupled to the bus by a three-port power combining device. In such systems, difficulties arise because the optical path loss can vary for different paths between the transmitter and receiver, mainly because the transmitters are different distances away from the receiver but also because of differing coupling losses. As a result, the power level at the receiver will change when a different transmitter takes over the bus. This necessitates an appropriate alteration in the decision threshold level of the receiver.

It is possible, of course, to provide a short time interval (guard time) between data bursts to allow time for detection of power levels and changing of the receiver's decision threshold level. A disadvantage of this approach, however, is that the guard time. intervals reduce the utilization efficiency of the communication channel or bus.

An object of one aspect of the present invention is to mitigate these disadvantages and ameliorate the problem.

Summary of the Invention

According to one aspect of the present invention, an optical communication system comprises a plurality of transmitters and at least one receiver connected to the transmitters by a communication channel. The transmitters are arranged for operating in time division multiplex mode, each transmitting data bursts in its assigned duty cycle or frame period. Each transmitter comprises a light source and drive means, e.g. a current source, responsive to a data signal to apply a corresponding current to said light source during a particular time or frame period. The current source maintains the output power of the light source, at the beginning and end of said time or frame period, at a level corresponding to the average of the maximum value and minimum value of said output power during said time period.

Effectively, the current is switched instantaneously between three levels - an average level in the absence of a data signal and a maximum level and a minimum level corresponding to the maximum and minimum levels, respectively, of the data signal. This permits substantially instantaneous changeover from one transmitter to the other since the receiver's comparator/threshold is set to the aforesaid average value. Preferably, the output power of each transmitter has an increasing ramp waveform as a precursor to its own assigned time period and a decreasing ramp waveform posterior to its time period or frame of data.

Each ramp waveform may extend in amplitude from a substantially zero light level to the average light level, equal to one half the sum of the maximum and minimum light levels. The data signal may then vary the light level about this average light level. Preferably the ramp is long relative to a bit period of the data and may conveniently be equal to said time period or duration of the data frame.

Ideally the shape of the "turn-on" or precursor ramp waveform should be that of a first half of a sine wave i.e. between its minimum and maximum values and the shape of the "turn-off" or posterior ramp waveform should be that of the "falling", second half of the sine wave i.e. from its maximum to its minimum value.

The drive means may comprise two source means, one for driving the light source in response to the data signal, and responding virtually instantaneously to signal changes. The other source means may generate the average power level and, where applicable, the ramps, and exhibit a slower response.

Preferably the data to be transmitted employs a balanced line code so that the spectral component of the data is low at low frequencies. Where a balanced binary code is used, the mean level during the data burst is equal to the mean of the "1" and "0" levels. Balanced ternary or pseudoternary codes, for example, may also be employed.

Brief Description of the Drawings

An embodiment of the invention will now be described, by way of example only, with reference to the accompanying drawings, in which:-

Figure 1 is a schematic diagram of an optical transmitter for an optical system in which a plurality of such transmitters are coupled by a common channel to an optical receiver;

Figure 2 shows the output waveform of the transmitter;

Figure 3 shows the waveform "seen" by the receiver;

Figure 4 is a schematic diagram of an optical receiver.

## Detailed Description of a Specific Embodiment

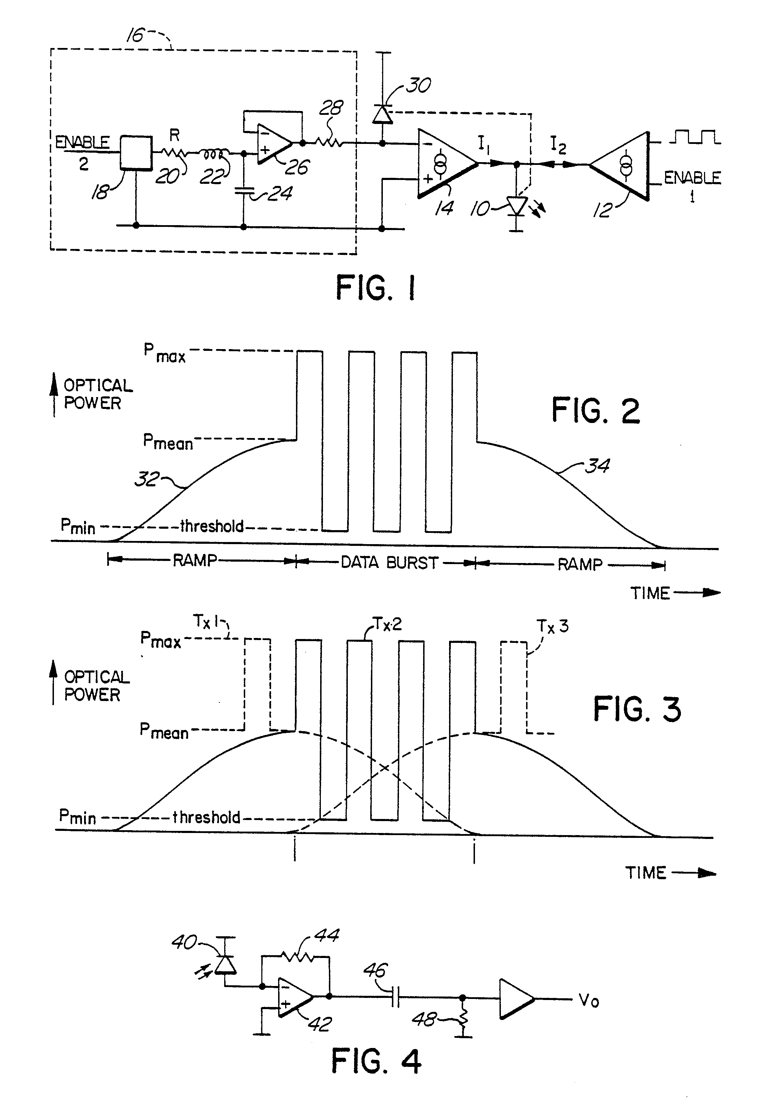

The transmitter shown in Figure 1 comprises a laser diode 10 driven, in common, by drive means in the form of two current sources comprising amplifiers 12 and 14, respectively. The data to be transmitted is applied to one input of amplifier 12 and an enabling signal, designated ENABLE 1, is applied to the other. When signal ENABLE 1 is high the current $I_2$, supplied by current source amplifier 12, swings about a mean value and between a maximum value $+I_M$ and a minimum value $-I_M$. The output power of the laser diode 10 correspondingly varies about a mean or average value $P_{mean}$ and between maximum value $P_{max}$ and minimum value $P_{min}$ as shown in Figures 2 and 3.

For simplicity of description, only one transmitter is shown in Figure 1. It should be understood, however, that a system according to the invention will have several such transmitters coupled via a common channel to the same receiver. Hence, the light output from each light source 10 will be combined with that from the others.

Current source 14 is driven by a ramp signal generator 16 comprising a step function generator 18, and a filter formed by a series resistor 20, series inductor 22 and shunt capacitor 24. The resistor 20 and the inductor 22 are connected, in series, between the output of step function generator 18 and the non-inverting input of a buffer amplifier 26. The capacitor 24 is connected between such non-inverting input and ground.

The output of the buffer amplifier 26 is connected by a series resistance 28 to the inverting input of current source amplifier 14 and to the anode of a photodiode 30. The cathode of the photodiode 30 is connected to a bias rail. The photodiode 30 is positioned so as to receive light from the laser 10. In practice, the photodiode 30 will usually be mounted facing the back facet of the laser 10.

An enabling signal, designated ENABLE 2, (synchronized to enabling signal ENABLE 1) is applied to the input of step-function generator 18. The stepped waveform from the output of step-function generator 18 is modified by the RLC filter.

The value of the resistance 20 is such that the LC combination is substantially critically-damped. Hence, the output of the filter is its critically-damped step response which approximates to the rising half of a sine wave - i.e. between minimum and maximum values as indicated at 32 in Figure 2.

This sine-wave signal, applied by way of buffer amplifier 26 to the current source 14, produces a corresponding current $I_1$ to be applied to laser diode 10. Optical feedback between the laser diode 10 and photodiode 30 stabilizes the laser output over a long time period.

The timing of the two enabling signals, ENABLE 1 and ENABLE 2 is so arranged that, when the sine-wave "ramp" reaches its maximum, which is actually the mean level for the data signal, the data signal is applied to the current source 12. The respective gains are such that the output of the current source 12 alternately doubles the current in the laser diode 10 to $+I_M$ and reduces it to $-I_M$, which is substantially zero - actually just above the threshold value for the laser.

When the data burst (in this case comprising 4 bits) has ended, the output power level falls virtually instantaneously to the mean. If a slower fall were permitted, the receiver's threshold evel would not have the correct relationship to the mean of the input signal during the first few bits of the next frame. The output of the step-function generator 18 is then effectively grounded, causing the current from current source 14, and hence the output power, to decay, as shown at 34 in Figure 2, with a waveform that is approximately the second half, i.e. from maximum to minimum, of a sine wave.

It will be noted that the data comprises a balanced line code. Consequently, the DC component of the signal is independent of the data content. The line code is of the balanced "binary" type so the mean level during the data burst is equal to the mean of the "1" and "0" levels, i.e. the number of 1's is equal to the number of 0's.

Because the drive current for the transmitter is only turned on when it is needed to transmit data, the mean current from transmitters that are inactive is much less than it would be if the transmitters were on continuously at their mean power level. Consequently steady state light from inactive transmitters, aggregating at the receiver, is less. This reduces quantum or shot noise, improving receiver sensitivity.

Because he spectral content of the ramps 32 and 34 is low compared to the spectral content of the data burst, a suitable high pass filter at the receiver (see Figure 4) will filter out the ramps. The amplitude of the remaining signal will still vary from transmitter to transmitter but the decision threshold will remain at the same, substantially zero level at all times, (where the transmitters are a.c. coupled).

As illustrated in Figure 3, the light incident upon the receiver during any one data burst will be the aggregate of light from three transmitters, Tx1, Tx2 and Tx3. These comprise the data burst of Tx2, the decaying ramp following the immediately preceding data burst of Tx1, and the rising ramp of the immediately trailing data burst of Tx3.

As stated earlier, the low frequency component constituting the rising and falling ramps is at a lower frequency than the data burst and so is removed by a high pass filter at the input to the receiver. In the specific embodiment, the first current source responds fast enough to follow the data burst. On the other hand, the second source means is too slow to follow the data burst.

Figure 4 shows the receiver and associated high pass filter. The light signal is received by a photodiode 40 which has its anode connected to inverting input of an amplifier 42 which has its non-inverting input grounded. The amplifier 42 has a feedback resistance 44 between its output and its inverting input, thus constituting a transimpedance amplifier. The output of amplifier 42 is also connected by way of a series capacitor 46 in common to a second resistance 48 and the input of a second amplifier 50, which serves as a buffer. The capacitor 46 and resistance 48, the other terminal of which is grounded, constitute the aforementioned high pass filter, with a characteristic $H(f) = \dfrac{1}{1+sRC}$

It should be appreciated that other shapes of ramp may be used to provide the "predetermined waveform", provided that the spectral content of the ramps is below the spectral content of the data, so that the two can be separated by means of a suitable filter. In the limit the ramp may be infinite, i.e. the mean power level maintained constantly from one time or frame period throughout the next. However, the disclosed ramps are preferred for the additional benefit of reduced quantum or shot noise.

It should be noted that the term "average" is used herein in its broad sense to cover, inter alia, mean, median and mode.

## Claims

1. An optical communication system comprising a plurality of optical transmitters and an optical receiver arranged to receive light from said plurality of transmitters in common and successively, each of said transmitters being characterized by:-

a light source (10);

drive means (12,14) responsive to a data signal for applying a corresponding current ($I_2$) to said light source (10) during a particular time period, the drive means (12,14) serving to maintain the output power of said light source (10), at the beginning and the end of said time period, at a level corresponding to an average of the maximum ($P_{max}$) and minimum ($P_{min}$) output power during said time period.

2. An optical communication system as defined in claim 1, characterized in that said drive means (12,14) is further operable to drive said light source (10) during the time period immediately preceding said particular time period such that its output power increases gradually according to a predetermined waveform to said level and during a time period immediately following said particular time period, so that its output power decays gradually from said level.

3. An optical communication system as defined in claim 1 or 2, wherein said receiver (Figure 4) comprises a high pass filter configured to remove substantially the effects of said predetermined waveform from the transmitted data.

4. An optical communication system as defined in claim 2, wherein said drive means (12,14) includes a first source means (12) responsive to said data signal and a second source means (14,16) including means (18) responsive to an enabling signal (2) for generating a step waveform, said second source means (14,16) including filter means (20,22,24) responsive to said step waveform to provide a signal varying according to the first-mentioned predetermined waveform.

5. An optical communication system as defined in claim 4, wherein said second source (14) is further responsive to a monitoring device (30) coupled optically to said light source (10).

6. An optical communication system as defined in claim 3, wherein said second source (14) is further responsive to a monitoring device (30) coupled optically to said light source.

7. An optical communication system as defined in claim 5 or 6, wherein said data signal comprises a balanced code having a mean level corresponding to the maximum value of the current from said second source means (14,16).

8. An optical communication system as defined in claim 2, wherein said drive means (12,14) is arranged to provide a substantially sinusoidal said predetermined waveform.

9. A transmitter for an optical communication system that comprises a plurality of optical transmitters and an optical receiver arranged to receive light in common from said plurality of transmitters successively, said transmitter being characterized by:-

a light source;

drive means responsive to a data signal for applying a corresponding current to said light source during a particular time period, the drive means serving to maintain the output power of said light source, at the beginning and the end of said time period, at a level corresponding to the average of the maximum and minimum output power during said time period.

10. A transmitter as defined in claim 9, wherein said drive means (12,14) is further operable to drive said light source (10) during the time period immediately preceding said particular time period such that its output power increases gradually according to a predetermined waveform to said level and during a time period immediately following said particular time period, so that its output power decays gradually from said level.

11. A transmitter as defined in claim 10, wherein said drive means (12,14) includes a first source means (12) responsive to said data signal and a second source means (14,16) including means (18) responsive to an enabling signal (2) for generating a step waveform, said second source means (14,16) including filter means (20,22,24) responsive to said step waveform to provide a signal varying according to the first-mentioned predetermined waveform.

12. A transmitter as defined in claim 11, wherein said second source means (14) is further responsive to a monitoring device (30) coupled optically to said light source (10).

13. A transmitter as defined in claim 9, wherein said data signal comprises a balanced code having a mean level corresponding to the maximum value of the current from said second current source (14, 16).

14. A transmitter as defined in claim 10, wherein said drive means (12,14) is arranged to provide a substantially sinusoidal predetermined waveform.

0 251 484

FIG. I

FIG. 2

FIG. 3

FIG. 4